Europäisches Patentamt

European Patent Office

Office européen des brevets

(19)

(11) **EP 1 176 730 A1**

(12) **EUROPEAN PATENT APPLICATION**

(43) Date of publication:
**30.01.2002 Bulletin 2002/05**

(51) Int Cl.[7]: **H04B 1/707**

(21) Application number: **00402136.6**

(22) Date of filing: **26.07.2000**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **MOTOROLA, INC.**
**Schaumburg, IL 60196 (US)**

(72) Inventors:
• **Myara, David**
 **31000 Toulouse (FR)**
• **Buljore, Soodesh**
 **91440 Bures sur Yvette (FR)**

(74) Representative: **Litchfield, Laura Marie et al**
 **Motorola European Intellectual Property
 Operations, Midpoint - Alencon Link
 Basingstoke, Hampshire RG21 7PL (GB)**

(54) **Interference estimation in a communications system**

(57)     Estimation of Interference Signal Code Power (ISCP) in a third generation cellular communications system is facilitated by exploiting the known properties of the common pilot channel signal. This signal is correlated (4) in a mobile user terminal with a locally generated (5) orthogonal symbol sequence to produce a noise plus interference power estimate. This estimate can be used to calculate a signal to interference noise ratio for the purposes of power control.

*FIG. 2*

EP 1 176 730 A1

**Description**

This invention relates to an apparatus and method for estimating noise and interference power levels and particularly to the estimation of Interference Signal Code Power (ISCP) in a CDMA (Code Division Multiple Access) cellular communications system.

In a cellular communication system, each of the user terminals (typically mobile stations) communicates with a fixed Base Station (BS). Communication from the user terminal to the Base Station is known as uplink and communication from the Base Station to the user terminal is known as downlink.

A cellular mobile communication system is allocated a frequency spectrum for the radio communication between the user terminals and the base stations. This spectrum must be shared between all user terminals simultaneously using the system.

One method of sharing this spectrum is by a technique known as Code Division Multiple Access (CDMA). In one example of a direct sequence CDMA communication system, the signals are, prior to being transmitted, multiplied by a high rate code whereby the signal is spread over a larger frequency spectrum. A narrow band signal is thus spread and transmitted as a wideband signal. One symbol of information is represented by a signature sequence. Receiving the transmitted sequence allows recovery of the information symbol. The signature sequence usually comprises n symbols and each symbol is called a chip. The entire modulated n-chip sequences are referred to as transmitted symbols $\vec{s}_k$. At the receiver, the original narrowband signal is regenerated by multiplication of the received signal with the same code. A signal spread by use of a different code will, at the receiver, not be de-spread but will remain a wideband signal. In the receiver the majority of interference caused by interfering signals received in the same frequency spectrum as the wanted signal, can thus be removed by filtering. Consequently, a plurality of user terminals can be accommodated in the same wideband spectrum by allocating different codes for different user terminals. Codes are chosen to minimize the interference caused between user terminals typically by choosing orthogonal codes when possible. Codes are readily separable at the receiver if their orthogonality has been preserved during transmission, but often multipath effects destroy the orthogonality to a certain degree.

A further description of CDMA communications systems can be found in-"Spread Spectrum CDMA Systems for Wireless Communications", Glisic and Vucetic Artech House Publishers 1997, ISBN 0-89006-858-5. Examples of CDMA cellular communications systems are IS 95 standardised in North America and the Universal Mobile Telecommunication System (UMTS), also known as 3G currently under standardization in Europe.

In CDMA systems, the downlink transmission consists of a permanent pilot tone and a number of radio channels. The pilot tone can be used by a user terminal to estimate the path loss so as to set power control initially, and to acquire synchronisation to a code word generator in the receiver. The other channels are set aside for broadcasting control information and for the transmission of traffic ie speech or data. For UMTS, the current 3G PP (Third Generation Partnership Project) technical specification specifies a common pilot channel (CPICH) having a pre-defined bit/symbol sequence and frame structure.

The quality of the radio communication between the user terminal and the base station is determined by the signal to noise level of the signals where the noise includes both thermal noise and interference noise. Other base stations and user terminals generate interference which increases the noise level and thus reduces the quality of any received signal. Another factor which affects reception of a signal at a user terminal and contributes to the unwanted interference levels is channel fast fading caused by the signal arriving at a receiver via a number of different paths, ie multipath. In order to attain an acceptable quality level, the interference must be kept sufficiently low. A major technique for interference reduction in CDMA systems is the use of power control whereby the transmitted power of each user terminal and base station is maintained at the minimum level required for the signal to be received at an acceptable quality.

In order to facilitate power control at the user terminal, it is desirable for the user terminal to have an estimate of its Signal to Interference Noise Ratio "SINR". This in turn requires knowledge of its received interference noise level. $N_t$ which equates to the Interference Signal Code Power (ISCP) received at a user terminal.

This invention proposes a method and apparatus for estimating a noise plus interference power level of a received signal. In a preferred embodiment, an estimate of the ISCP at a user terminal for facilitating power control is made. In the preferred embodiment use is made of the signal received from a base station on the CPICH, as this pilot signal will suffer similar interference during transmission as speech or data received over the traffic channels.

Accordingly, the present invention consists of apparatus for estimating a noise plus interference power level $N_t$ of a first signal received at a communications terminal and comprising a first symbol sequence, the apparatus including a correlator for correlating a second signal comprising a second symbol sequence, which is orthogonol to the first symbol sequence, with the first signal to produce the estimated noise plus interference power level, wherein the second symbol sequence has the form

$$\vec{S}_k = \left( S_i e^{-j\frac{2\pi(k+1)i}{N}} \right)_{i \in [0,N-1]}$$

Where $S_i$ is a symbol value of the first signal and N is the number of symbols comprising the first signal.

The first signal may comprise a pilot signal carried on a Common Pilot Channel (CPICH) and transmitted from a base station forming part of a cellular communications network. The communications terminal may be a mobile user terminal.

The value of $N_t$ which equates to an Interference Signal Code Power (ISCP) can be used to determine a signal to interference noise ratio (SNIR) which can be subsequently used in a power control operation.

The orthogonal sequences may be generated locally in the communications terminal or such a sequence may be stored in a memory in the communications terminal.

An embodiment of the invention will now be described, by way of example only, with reference to the drawings of which;

Figure 1 is a diagram showing a symbol sequence of a Common Pilot Channel (CPICH) and
Figure 2 is a block diagram of circuitry in accordance with the invention.

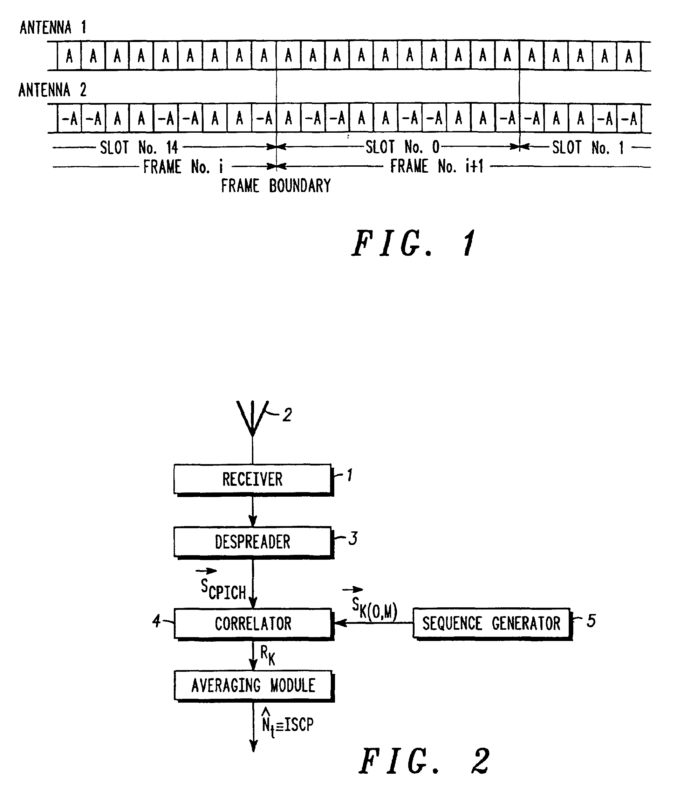

In the current specification for UMTS, the CPICH is a fixed rate downlink physical channel carrying a pre-defined bit/symbol sequence and frame structure where one frame consists of 15 time slots. The CPICH symbol sequence is known by all user terminals. Where transmit diversity is used, the CPICH pilot signal is transmitted from both antennas using the same channelisation and scrambling code. However, the pre-defined symbol sequences are different for the two antennas and are shown in Figure 1. In the case of no transmit diversity, the symbol sequence of antenna number 1 is used.

The circuitry of Figure 2 forms part of a user terminal and comprises a conventional receiver 1 for receiving signals from a remote base station (not shown) via an antenna 2. An output of the receiver 1 is connected to a de-spreader 3 whose output in turn is connected to a first input of a correlator 4. A second input to the correlator 4 is supplied by a sequence generator 5. An output from the correlator 4 is fed to an averaging module 6 and this module's output is an estimate of the interference signal code power received by the user terminal.

It will be understood that the user terminal of Figure 2 also includes further conventional circuitry required for effecting communications with remote base stations, but such circuitry is omitted for the sake of clarity. In operation and for the case without transmit diversity, the remote base station transmits data or voice signals and a pilot signal on the CPICH, all or which are received at the receiver 1. The de-spreader 3 separates voice/data signals from the pilot signal on the CPICH.

If the CPICH sequence contains N symbols, then it can be represented as

$$\vec{S}_{CPICH} = (S_i)_{i \in [0,N-1]}$$

Let the despread sequence for CPICH, on a given finger in the rake receiver of the receiving circutry 1 be:

$$\vec{S}_{CPICH, received} = (\hat{S}_i)_{i \in [0,N-1]} = (\alpha S_i + N_{t, i})_{i \in [0,N-1]}$$

This is the output of the despreader 3.

$\alpha$ is the path complex gain and $N_{ti}$ is the noise plus interference on the received CPICH symbol i.

A set of M sequences orthogonal one to each other and orthogonal to the CPICH sequence are generated in the code generator 5 and represented as:

$$\left( \vec{S}_k \right)_{k \in [0,M-1]} = ((S^{(k)}_i)_{i \in [0,N-1]})_{k \in [0,M-1]}$$

ie:

$$\vec{S}_k = \left( S_i e^{-j\frac{2\pi(k+1)i}{N}} \right)_{i \in [0,N-1]}$$

Where $S_i$ is the symbol value of the pre-defined CPICH, k runs from o to M-1 sequences and i runs from 0 to N-1 symbols in the CPICH sequence.

These orthogonal sequences are correlated with the despread signal to obtain a random variable, the variance of which is the noise plus interference power as follows:

$$R_k \simeq \frac{\vec{S}_{CPICH,received} \cdot \vec{S}_k}{\left\| \vec{S}_k \right\| \sqrt{SF}} = \sum_{j=0}^{N-1} \frac{\hat{S}_j S^{(k)*}_j}{\sqrt{SF \sum_{l=0}^{N-1} \left| S^{(k)}_j \right|^2}}$$

Where SF is the spreading factor. The signal $R_K$ is averaged by the averaging module 6.

Thus the noise plus interference power can be estimated without bias as;

$$\hat{N}_t = \sum_{k=0}^{M-1} \frac{\left| R_k \right|^2}{M}$$

where M is the number ot sequences.

The bigger M, the more precise will be the estimation, and M<N.

The term $N_t$ equates to the desired ISCP and can be used in a known manner by the user terminal for power control or may be reported back to a base station if required. For example, the SNIR can be determined by dividing the measured received signal $E_b$ by the calculated $N_t$ (ISCP) value.

The complexity of this method is, per slot and per finger of the rake receiver: N-2 real additions, N-1 squarings, N-1 correlations of length N (N complex multiplications and N-1 complex additions). So it represents a total of 396 real multiplications and 188 real additions.

The invention can be extended further to the case of transmit diversity ie: for two transmit antennas at the base station.

In this case, two orthogonal pilot patterns are transmitted on each antenna for the CPICH. (See Fig. 1)

The maximum number of orthogonal sequences that can be found which are orthogonal one to each other and to the two pilot patterns, is M=N-2.

The diversity orthogonal pilot patterns which are transmitted on the diversity antenna are of the form:

$$\vec{S}^{(div)}_{CPICH} = (a_i S_i)_{i \in [0,N-1]}$$

With half of the $a_i$ equal to 1 and the other half equal to -1.

Define $u_i$ so that, if $a_i=1$, $a_i$ is the $u_i^{th}$ element of the sequence $(a_k)$ which is equal to 1.

Define $v_i$ so that, if $a_i=-1$, $a_i$ is the $v_i^{th}$ element of the sequence $(a_k)$ which is equal to -1.

Also define b; so that:

if $a_i=1$, $b_i=1$
if $a_i=-1$, if $b_i=0$

Below are two sub-sets of N-2 orthogonal sequences, split into 2 subset of N/2-1 sequences (provided N is even):

The first subset is:

$$\vec{S}^{(1)}{}_k = \left( S_i b_i e^{-j\frac{2\pi(k+1)u_i}{2N}} \right)_{i \in [0,\frac{N}{2}-1]} \qquad (A)$$

The second subset is:

$$\vec{S}^{(2)}{}_k = \left( S_i(1-b_i)e^{-j\frac{2\pi(k+1)v_i}{2N}} \right)_{i \in [0,\frac{N}{2}-1]} \qquad (B)$$

These two sub-sets are generated in the symbol sequence generator 5 and correlated in the correlator 4 with the incoming CPICH signal from the despreader 3 to produce a value for noise plus interference power $N_t$.

The complexity of this method is, per slot and per finger (if no operation is made when the sequence element value is 0, the correlation length becomes N/2): N-3 real additions, N-2 squarings, N-2 correlations of length N/2 (N/2 complex multiplications and N/2-1 complex additions). So it represents a total of 192 real multiplications and 87 real additions.

The two sub-sets can also be used even if transmit diversity is not enabled by a base station which is being monitored. The base station could be a serving or neighbouring base station.

It will be noted that the sequences (A) and (B) above can be used as orthogonal sequences for the CPICH in addition to the sequences of Figure 1 when N transmit antennas are employed at the base station.

## Claims

1. Apparatus for estimating a noise plus interference power level $\hat{N}_t$ of a first signal received at a communications terminal and comprising a first symbol sequence, the apparatus including a correlator (4) for correlating a second signal comprising a second symbol sequence which is orthogonal to the first symbol sequence, with the first signal to produce the estimated noise plus interference power level, wherein the second symbol sequence has the form;

$$\vec{S}_k = \left( S_i e^{-j\frac{2\pi(k+1)i}{N}} \right)_{i \in [0,N-1]}$$

where $S_i$ is a symbol value of the first signal and N is the number of symbols comprising the first signal.

2. Apparatus as claimed in claim 1 in which the first signal is a pilot signal carried on a common pilot channel and transmitted from a base station forming the part of a cellular communications network.

3. Apparatus as claimed in claim 2 in which the communications terminal is a mobile user terminal.

4. Apparatus as claimed in any preceding claim and further including a symbol sequence generator (5) for generating the second signal.

5. Apparatus as claimed in any preceding claim wherein the first symbol sequence comprises two orthogonal patterns and the second symbol sequence comprises first and second sub-sets having the form

$$\vec{S}^{(1)}{}_k = \left( S_i b_i e^{-j\frac{2\pi(k+1)u_i}{2N}} \right)_{i \in [0,\frac{N}{2}-1]} \qquad \text{(A)}$$

$$\vec{S}^{(2)}{}_k = \left( S_i(1-b_i)e^{-j\frac{2\pi(k+1)v_i}{2N}} \right)_{i \in [0,\frac{N}{2}-1]} \qquad \text{(B)}$$

6. A method for estimating a noise plus interference power level $\hat{N}_t$ of a first signal received at a communications terminal and comprising a first symbol sequence, the method including the steps of, correlating a second signal comprising a second symbol sequence which is orthogonal to the first symbol sequence, with the first signal to produce the estimated noise plus interference power level, wherein the second symbol sequence has the form

$$\vec{S}_k = \left( S_i e^{-j\frac{2\pi(k+1)i}{N}} \right)_{i \in [0,N-1]}$$

where $S_i$ is a symbol value of the first signal and N is the number of symbols comprising the first signal.

7. A method as claimed in claim 5 in which the first signal is a pilot signal carried on a common pilot channel and transmitted from a base station forming part of a cellular communications network.

ANTENNA 1

| A | A | A | A | A | A | A | A | A | A | A | A | A | A | A | A | A | A | A | A | A | A | A | A | A |

ANTENNA 2

| -A | -A | A | A | -A | -A | A | A | -A | A | -A | -A | A | A | -A | -A | A | A | -A | -A | A | A | -A | -A |

——— SLOT No. 14 ——— SLOT No. 0 ——— SLOT No. 1 ———

——— FRAME No. i ——— FRAME No. i+1 ———

FRAME BOUNDARY

## *FIG. 1*

$\Psi$ 2

| RECEIVER | 1

↓

| DESPREADER | 3

$\vec{S}_{CPICH}$ ↓        $\vec{S}_{K(0,M)}$

4 | CORRELATOR | ← | SEQUENCE GENERATOR | 5

$R_K$ ↓

| AVERAGING MODULE |

↓ $\hat{N}_t \equiv ISCP$

## *FIG. 2*

**European Patent Office**

**EUROPEAN SEARCH REPORT**

Application Number

EP 00 40 2136

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 00 21208 A (ERICSSON INC) 13 April 2000 (2000-04-13) * abstract; figure 3 * * page 6, line 21 - line 25 * * page 7, line 6 - line 20 * * claims 1-3,9,10,18 * | 1-7 | H04B1/707 |
| A | WO 00 38457 A (ERICSSON TELEFON AB L M) 29 June 2000 (2000-06-29) * page 9, line 2 - line 18 * * page 12, line 13 - line 20 * | 1-10 | |
| A | WO 99 29048 A (QUALCOMM INC) 10 June 1999 (1999-06-10) * claims 1,2 * | 1-10 | |

TECHNICAL FIELDS SEARCHED (Int.Cl.7)

H04B

The present search report has been drawn up for all claims

| Place of search | Date of completion of the search | Examiner |
|---|---|---|
| THE HAGUE | 15 December 2000 | Ó Donnabháin, E |

## ANNEX TO THE EUROPEAN SEARCH REPORT
## ON EUROPEAN PATENT APPLICATION NO.

EP 00 40 2136

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2000

| Patent document cited in search report | | Publication date | Patent family member(s) | | Publication date |
|---|---|---|---|---|---|
| WO 0021208 | A | 13-04-2000 | AU | 1309200 A | 26-04-2000 |
| WO 0038457 | A | 29-06-2000 | AU | 2538000 A | 12-07-2000 |
| | | | AU | 3040400 A | 12-07-2000 |
| | | | WO | 0038455 A | 29-06-2000 |
| WO 9929048 | A | 10-06-1999 | AU | 1614299 A | 16-06-1999 |
| | | | EP | 1036437 A | 20-09-2000 |

For more details about this annex : see Official Journal of the European Patent Office, No. 12/82